(19) Europäisches Patentamt
European Patent Office
Office européen des brevets

(11) Veröffentlichungsnummer: **0 031 300 B1**

# (12) EUROPÄISCHE PATENTSCHRIFT

(45) Veröffentlichungstag der Patentschrift: **23.11.83**

(51) Int. Cl.³: **D 06 M 13/26**

(21) Anmeldenummer: **80810389.9**

(22) Anmeldetag: **15.12.80**

## (54) Verfahren zum antielektrostatischen Ausrüsten von synthetischen Textilmaterialien.

(30) Priorität: **20.12.79 CH 11316/79**

(43) Veröffentlichungstag der Anmeldung: **01.07.81 Patentblatt 81/26**

(45) Bekanntmachung des Hinweises auf die Patenterteilung: **23.11.83 Patentblatt 83/47**

(84) Benannte Vertragsstaaten: **BE CH DE FR GB LI**

(56) Entgegenhaltungen:
**CH - B - 369 255**
**DE - B - 1 469 427**
**FR - A - 2 264 121**
**US - A - 2 974 066**

**TEXTIL-BETRIEB, Band 91, Dezember 1973, Vogel-Verlag WÜRZBURG (DE) ANONYM: «Phosphorsäureester - Spezialprodukte für Synthesefasermaterial» Seiten 55-56**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Schäfer, Paul, Dr., Kornfeldstrasse 11, CH-4125 Riehen (CH)**
Erfinder: **Mayer, Fritz, Kreuzstrasse 4, D-7858 Weil am Rhein (DE)**
Erfinder: **Kündig, Jürg, Aumattstrasse 139, CH-4153 Reinach (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

Verfahren zum antielektrostatischen Ausrüsten von synthetischen Textilmaterialien

Aus «Textilbetrieb» (Dezember 1973) ist bekannt, dann komplexe, organische Phosphatester von nichtionogenen, mit Alkyl oder Alkylphenyl verätherten Polyäthylenoxidaddukten Emulgatoren mit gleichzeitig antielektrostatischen und gleitenden Eigenschaften darstellen. Diese Phosphorsäureester enthalten oberflächenaktive Polyäthylenglykolätheranteile und werden als Hilfsmittel für die Synthesefaserverarbeitung verwendet. Diese Säureester können jedoch nicht in filmbildenden Zubereitungen eingesetzt werden, da sie gleitende Eigenschaften besitzen und deshalb die Florbeständigkeit vom Teppichmaterialien herabsetzen.

Es wurde nun gefunden, dass saure Phosphorsäureester, die sich von tensidfreien, unverätherten oder mit niederen Alkanolen monoverätherten Polyäthylenglykolen ableiten, in wässerige filmbildede Zubereitungen eingesetzt werden können, die zum antielektrostatischen Ausrüsten von synthetischen Textilmaterialien geeignet sind.

Gegenstand vorliegender Erfindung ist demnach ein Verfahren zum antielektrostatischen Ausrüsten von synthetischen Textilmaterialen. Das Verfahren ist dadurch gekennzeichnet, dass man die Textilmaterialien mit einer wässerigen, filmbildenden Zubereitung beschichtet, welche einen sauren Phosphorigsäureester oder vorzugsweise Phosphorsäureester eines gegebenenfalls monoverätherten Diols der Formel

(1) $HO\text{-}(CH_2\text{-}CH_2\text{-}O)_n-Z$

worin Z Wasserstoff oder Alkyl mit 1 bis 4 Kohlenstoffatomen und n 10 bis 50 bedeuten, enthält.

Vorteilhafterweise ist der erfindungsgemäss verwendbare Säureester aus 1 Mol Diol mit 0,5 bis 2 Mol, vorzugsweise 1 bis 2 Mol phoshoriger Säure oder vorzugsweis Phosphorsäure aufgebaut.

Die sauren Gruppen der sauren Säureester können als freie Säure oder als wasserlösliches Salz z.B. Alkalimetallsalz oder Ammoniumsalz vorliegen. Als Alkalimetallsalz sei insbesondere das Natrium- oder Kaliumsalz und als Ammoniumsalz das Ammonium-, Trimethylammonium-, Manoäthanolammonium, Diäthanolammonium- und Triäthanolammoniumsalz genannt.

Der saure Säureester leitet sich vorzugsweise von unverätherten Diolen der Formel (1) ab, worin Z Wasserstoff bedeutet. Beispiele derartiger Diole sind Polyäthylenglykole mit einem durchschnittlichen Molekulargewicht von 450 bis 2200, besonders 550 bis 1800. Als Mono-$C_1$-$C_4$-alkyläther der Diole der Formel (1) kommen insbesondere die entsprechenden Monomethyl- oder Monoäthyläther in Betracht.

Die Herstellung der erfindungsgemäss verwendbaren Säureester erfolgt nach bekannten Methoden. Ein Verfahren zur Herstellung dieser Produkte besteht darin, dass man das Diol mit ortho-Phosphorsäure oder orto-phosphoriger Säure oder deren Anhydriden umsetzt und gegebenenfalls das Produkt in ein Salz überführt. Die Umsetzung mit den Säuren erfolgt vorteilhafterweise bei einer Temperatur von 80° bis 200° C, vorzugsweise 140° bis 180° C. Bei Verwendung der Säureanhydride ist es zweckmässig, diese bei Temperaturen von 0 bis 30° C mit dem Diol zur Einwirkung zu bringen.

Für die Durchführung der Reaktion ist die Verwendung von Lösungsmitteln nicht erforderlich. Gewünschtenfalls können jedoch auch Lösungsmittel wie Benzol, Toluol, Xylol, Tetrachlorkohlenstoff, Chloroform, Chlorobenzol, Nitrobenzol oder andere inerte Lösungsmittel verwendet werden.

Die erfindungsgemäss einzusetzenden sauren Säureester liegen in der wässerigen Zubereitung zweckmässig in einer Menge von 0,2 bis 10 Gew.%, insbesondere 0,5 bis 6 Gew.%, bezogen auf den Trockengehalt der Zubereitung, vor.

Gegenstand der Erfindung ist ferner eine wässerige Zubereitung zur Durchführung des antielektrostatischen Ausrüstverfahrens, sowie das antielektrostatisch ausgerüstete synthetische Textilmaterial.

Neben den definitionsgemässen Phosphorigsäureestern oder Phosphorsäureestern enthält die erfindungsgemässe Zubereitung zweckmässigerweise noch wässerige Latices von synthetischen Polymeren, die als Bindemittel und filmbildende Beschichtungsmaterialien dienen, sowie Füllstoffe.

Als synthetische Polymere können Polyäthylen, Polypropylen, Polybutadien, Polymethylmethacrylat, Polyäthylacrylat, Polystyrol, Polyvinylacetate, Polyvinylchlorid, Pholyvinylpyrrolidon, carboxylierte Polyvinylacetate, und insbesondere Copolymere von Butadien und Styrol oder vor allem carboxylierte Copolymere von Butadien und Styrol verwendet werden.

Als Füllstoffe eignen sich beispielsweise feinverteiltes Siliciumdioxid, Silikate, Bentonite, Kaoline, Titandioxid, Aluminiumoxid-Hydrat, Satinweiss und vor allem Calciumcarbonat.

Die erfindungsgemässen Zubereitungen weisen zweckmässig einen Trockensubstanzgehalt von etwa 50 bis 90, vorzugsweise 60 bis 80 Gewichtsprozent auf.

Der Gehalt an wässrigen Latices in den erfindungsgemässen Zubereitungen kann etwa 30 bis 60, vorzugsweise 40 bis 50 Gewichtsprozent betragen, während für die Füllstoffe die Mengen 100 bis 500, vorzugsweise 200 bis 400, bezogen auf den Trokkengehalt des Latexes, betragen können.

Die wässrigen Zubereitungen können als weitere Zusätze z.B. Säuren, insbesondere niedermolekulare organische Säuren, wie Ameisen- oder Essigsäure oder Basen, wie Alkalimetallhydroxyde, Ammoniakwasser oder niedere Alkanolamine zur Einstellung des pH-Wertes, Verdickungsmittel, Weichmacher, Lösungsmittel oder Antischaummittel enthalten. Der pH-Wert der Zubereitungen kann im Bereich von 6 bis 10 sein, liegt jedoch vorteilhafterweise bei 7 bis 9 und vorzugsweise bei 7,5 bis 8,5. Gegebenenfalls können auch gleichzeitig mit der Antistatischausrüstung weitere Ausrüst- oder Veredelungsmittel auf die Textilmaterialien aufgebracht werden,

wie z.B. Antimikrobika oder schmutzabweisende Mittel.

Als synthetische Textilmaterialien, die nach dem erfindungsgemässen Verfahren behandelt werden können, kommen z.B. solche aus Polyamid, Polyester, Polyacrylnitril oder Polyolefinen sowie deren Mischfasern in Betracht. Bevorzugt sind Textilmaterialien aus Polyamid. Es kann sich bei den Textilmaterialien aus den genannten Fasermaterialien um ungefärbte oder gefärbte Materialien handeln. Die Textilmaterialien liegen zweckmässig als Flocke, Kammzug, Gewebe, Gewirke, Vliesstoffe, Garn oder Stückware vor. Als Stückware seien insbesondere Bodenbeläge, wie z.B. (getuftete) Teppiche, oder andere Heimtextilien, wie Möbelbezugsstoffe, Vorhänge oder Wandverkleidungen genannt. Die Ausrüstung von Teppichmaterialien wie Velour- oder Schlingenflorteppichen, besonders aus synthetischem Polyamid ist bevorzugt. Dabei ist zu beachten, dass oftmals die elektrische Leitfähigkeit des Flormaterials entweder durch chemische Behandlung (Ausrüstung) oder durch Kohlefasermischung, oder Zumischung von metallisierten Synthesefasern oder Metallfasern sichergestellt ist.

Das Ausrüsten der Textilmaterialien wird zweckmässig durch Aufsprühen, Imprägnieren, Aufpflatschen oder Streichen vorgenommen. Diese Behandlung erfolgt vorzugsweise bei Raumtemperatur oder leicht erhöhter Temperatur (Temperaturbereich von etwa 15 bis 40° C). Man kann dazu wässrige Zubereitungen, welche die sauren Säureester als wässrige Emulsionen oder Dispersionen enthalten, verwenden.

Die Trocknung der behandelten Textilmaterialien kann bei einer Temperatur von 20 bis 180° C vorgenommen werden. Vorzugsweise erfolgt sie bei 80 bis 130° C, z.B. mittels Infrarot-Vorheizfelder, mit anschliessender Schaumbeschichtung und Düsentrocknung. Hiernach können die Textilmaterialien gegebenenfalls noch 12 bis 48 Stunden bei Raumtemperatur gelagert werden.

Gemäss vorliegender Erfindung wird vorteilhafterweise ein Gemisch bestehend aus dem definitionsgemässen organischen Phosphorsäureester, einem Polymerlatex und einem Füllstoff als wässerige Dispersion gleichmässig auf das zu behandelnde, nasse oder trockene Textilmaterial in einer solchen Menge (z.B. 100 bis 500 Gewichtsprozent, bezogen auf das Material) ausgestrichen, dass nach der Trocknung des Textilmaterials bei 80 bis 120° C eine genügende Schicht auf der Oberfläche des Textilmaterials zurückbleibt, damit die gewünschten antielektrostatischen Effekte erreicht werden.

Die behandelten Textilmaterialien, insbesondere Teppiche, zeigen gute antielektrostatische Effekte, d.h. es kommt zu keinen störenden Entladungen beim Berühren oder Begehen. Ferner wird der Griff und die Reibechtheiten und bei gefärbten Materialien auch die Lichtechtheit durch die Ausrüstung nicht negativ beeinflusst. Die Ausrüstungen auf Teppichen sind shamponierecht und werden auch durch Abbürsten und Absaugen (Staubsauger) oder Heisswasserextraktion nicht negativ beeinflusst.

Die Beschichtungpasten werden in ihrem Fliessverhalten kaum verändert. Ausserdem trocknet die Schicht mit den antistatisch wirksamen Zusätzen gleich schnell wie ohne Antistatika. Die Fibrillen- und Noppeneinbindungskraft wird durch die Zugabe der Antistatika nicht entscheident verändert. Die Biegesteifheit der Schicht und ihre gute Alterungsbeständigkeit sowie die Haftfähigkeit der Schaumschicht erfahren ebenfalls keine negative Beeinflussung.

Die folgenden Herstellungsvorschriften und Beispiele erläutern die Erfindung und zeigen, dass textile Fasermaterialien mit antistatisch verbesserten Eigenschaften erhalten werden, wenn sie nach dem erfindungsgemässen Verfahren behandelt werden. Die antielektrostatische Wirkung wird in Volt (als Mass für elektrostatische Aufladung) oder in Ohm (als Mass für den Oberflächenwiderstand) gemessen. Die Spürbarkeitsgrenze für den Menschen liegt bei 3000 Volt (Modern Textiles Magazine, January 1972, J.A. Gusack, Williamsburg, VA USA) bzw. bei $10^{10}$-$10^{11}$ Ohm, gemessen mit Ringelektroden gemäss der DIN-Norm 54345 - Testmethode.

*Herstellungsvorschriften*

*Vorschrift A*

60 g Polyäthylenglykol vom durchschnittlichen Molekulargewicht von 600 und 11,5 g Phosphorsäure 85% werden unter Rühren 3 Stunden auf 170° C erhitzt, wobei geringe Mengen Wasser abdestillieren. Man hält das Reaktionsgemisch eine weitere Stunde bei 170° C unter Wasserstrahlvakuum. Alsdann kühlt man auf 40° C ab und verdünnt das Reaktionsprodukt mit 21 g Wasser auf einen Trockengehalt von 75%. Man erhält eine dünnflüssige braune Lösung mit einer Viskosität von 143 mPas.

*Vorschrift B*

150 g Polyäthylenglykol vom durchschnittlichen Molekulargewicht von 1500 und 11,5 g Phposphorsäure 85% werden unter Rühren 3 Stunden auf 170° C erhitzt, wobei geringe Mengen Wasser abdestillieren. Man hält das Reaktionsgemisch eine weitere Stunde bei 170° C unter Wasserstrahlvakuum, kühlt auf 40° C ab und verdünnt mit 50 g Wasser auf einen Trockengehalt von 75%. Man erhält eine braune Lösung mit einer Viskosität von 293 mPas.

*Vorschrift C*

150 g Polyäthylenglykol vom durchschnittlichen Molekulargewicht 1500 und 23 g Phosphorsäure 85% werden unter Rühren 3 Stunden auf 170° C erhitzt, wobei geringe Mengen Wasser abdbestillieren. Man hält das Reaktionsgemisch 4 weitere Stunden bei 170° C unter Wasserstrahlvakuum, kühlt auf 40° C ab und verdünnt mit 55 g Wasser auf einen Feststoffgehalt von 75%. Es entsteht eine braune Lösung mit einer Viskosität von 293 mPas.

*Vorschrift D*

60 g Polyäthylenglykol vom durchschnittlichen Molekulargewicht 600 werden bei Raumtemperatur unter Kühlung mit 14,2 g Phosphorpentoxyd versetzt. Nach der Beendigung der exothermen Reaktion hält man das Reaktionsgemisch 2 Stunden bei 60° C, fügt anschliessend 20 g Wasser hinzu und

stellt mit Äthanolamin auf pH 7 ein. Alsdann verdünnt man mit Wasser auf einen Feststoffgehalt von 75%. Man erhält eine bräunliche Lösung mit einer Viskosität von 439 mPas.

*Vorschrift E*

150 g Polyäthylenglykol-monomethyläther vom durchschnittlichen Molekulargewicht 750 werden unter Kühlung mit 14,2 g Phosphorpentoxyd versetzt. Nach Beendigung der exothermen Reaktion hält man das Reaktionsgemisch 2 Stunden bei Raumtemperatur und anschliessend 2 Stunden bei 60° C. Nach Abkühlung auf Raumtemperatur wird der saure Phosphorsäureester mit 30%iger Natriumhydroxydlösung auf pH 7-7,8 neutralisiert und mit Wasser auf einen Wirkstoffgehalt von 75% eingestellt. Man erhält eine gelbe Lösung mit einer Viskosität von 236,7 mPas.

*Vorschrift F*

150 g Polyäthylenglykol-monomethyläther vom durchschnittlichen Molekulargewicht 750 und 16,4 g phosphorige Säure werden unter Rühren 3 Stunden auf 170° C erhitzt, wobei geringe Mengen Wasser abdestillieren. Man hält das Reaktionsgemisch 2 weitere Stunden bei 170° C unter Wasserstrahlvakuum. Man kühlt anschliessend auf Raumtemperatur ab, neutralisiert mit Äthanolamin auf pH 7-7,8 und verdünnt mit Wasser auf einen Wirkstoffgehalt von 75%. Man erhält eine gelbe Lösung mit einer Viskosität von 131 mPas.

*Vorschrift G*

Ersetzt man in Vorschrift F 150 g Polyäthylenglykol-monomethyläther durch 120 g Polyäthylenglykol vom durchschnittlichen Molekulargewicht 600 und verfährt man, wie in Vorschrift F beschrieben, so erhält man eine gelbe Lösung mit einer Viskosität von 161,2 mPas.

*Vorschrift H*

180 g Polyäthylenglykol vom durchschnittlichen Molekulargewicht 600 werden unter Kühlung mit 14,2 g Phosphorpentoxyd versetzt. Nach Beendigung der exothermen Reaktion hält man das Reaktionsgemisch 2 Stunden bei Raumtemperatur und 2 Stunde bei 60° C. Nach Abkühlung auf Raumtemperatur wird der saure Phosphorsäureester mit Äthanolamin auf pH 7-7,8 neutralisiert und mit Wasser auf einen Wirkstoffgehalt von 75% eingestellt. Man erhält einge gelbe Lösung mit einer Viskosität von 205,2 mPas.

*Vorschrift J*

120 g Polyäthylenglykol vom durchschnittlichen Molekulargewicht 600 und 15 g Phosphorsäure 85% werden unter Rühren 3 Stunden auf 170° C erhitzt, wobei geringe Mengen Wasser abdestillieren. Man hält das Reaktionsgemisch eine weitere Stunde bei 170° C unter Waserstrahlvakuum. Nach Abkühlung auf Raumtemperatur wird der saure Phosphorsäureester mit Äthanolamin auf pH 7-7,8 neutralisiert und mit Wasser auf einen Wirkstoffgehalt von 75% eingestellt. Man erhält eine gelbe Lösung mit einer Viskosität von 138,5 mPas.

*Vorschrift K*

Auf gleiche Art und Weise wie in Vorschrift H beschrieben werden 96 g Polyäthylenglykol vom durchschnittlichen Molekulargewicht 600 und 5,7 g Phosphorpentoxyd umgesetzt, mit dem Unterschied, dass der saure Phosphorsäureester mit wässrigem, konzentriertem Ammoniak statt Äthanolamin neutralisiert wird. Man erhält eine schwach gelbliche Lösung mit einer Viskosität von 164,8 mPas.

*Beispiel 1*

Jeweils 1000 g einer Mischung bestehend aus 500 Teilen einer 40%igen wässerigen Lösung eines Butadienstyrolcopolymerisates, 20 Teilen des gemäss Vorschrift A erhaltenen Phosphorsäureesters und 300 Teilen bzw. 400 Teilen bzw. 500 Teilen Calciumcarbonat werden pro Quadratmeter auf Polyamidteppich mit Polypropylenbändchengrundgewebe ausgestrichen und 20 Minuten bei 90° C getrocknet. Hierauf werden die beschichteten Teppiche während 24 Stunden bei 23° C und 25% relativer Luftfeuchtigkeit liegen gelassen. Alsdann misst man den elektrischen Oberflächenwiderstand der drei Schichten mittels Ringelektrode. Der entsprechende Oberflächenwiderstand beträgt $8.10^{12}$ Ohm (mit 300 Teilen Calciumcarbonat) $4.10^{12}$ Ohm (mit 400 Teilen Calciumcarbonat) und $5.10^{11}$ Ohm (mit 500 Teilen Calciumcarbonat). Der Oberflächenwiderstand für das Teppichmaterial ohne den Zusatz des Phosphorsäureesters beträgt jeweils $10^{14}$ Ohm. Anstelle des gemäss Vorschrift A hergestellten Phosphorsäureesters können auch gleiche Mengen der gemäss den Vorschriften B, C und D hergestellten Säureester verwendet werden.

*Beispiel 2*

1000 g einer Mischung bestehend aus 100 Teilen einer 50%igen wässerigen Lösung eines Butadienstyrolcopolymerisates, 200 Teilen Calciumcarbonat und 6 Teilen des gemäss Vorschrift B erhaltenen Phosphorsäureesters werden pro Quadratmeter auf einen Tuftingteppich mit Schlingenflor und Polypropylenbändchengrundgewebe gestrichen und 30 Minuten bei 90° C getrocknet. Hierauf wird der beschichtete Teppich 24 Stunden bei 23° C und 25% relativer Luftfeuchtigkeit liegen gelassen. Nach Messung mit der Ringelektrode beträgt der Oberflächenwiderstand der Teppichschicht $10^{11}$ Ohm.

Der Oberflächenwiderstand für das Teppichmaterial ohne Zusatz des Phosphorsäureesters beträgt hingegen $10^{14}$ Ohm.

*Beispiele 3 bis 8*

Von einer Mischung bestehend aus 100 Teilen einer 50%igen wässerigen Lösung eines Butadien-Styrolcopolymerisates, 200 Teilen Calciumcarbonat und jeweils 6 Teilen der gemäss Vorschrift E bis K hergestellten Phosphorsäureester bzw. Phosphorigsäureester werden 1000 g pro Quadratmeter auf Polyamidtufting-Teppich aufgestrichen und 60 Minuten bei 105° C getrocknet. Hierauf wird der beschichtete Teppich 24 stunden bei 20° C und 25% relativer Luftfeuchtigkeit liegen gelassen. Nach 24 Stunden wird der Oberflächenwiderstand mittels der Ringelektrode gemessen. Die Ergebnisse sind in der folgenden Tabelle 1 angegeben.

*Tabelle 1*

| Beispiel | Phosphorsäureester bzw. Phosphorigsäureester gemäss Vorschrift | Widerstand in Ohm |
|---|---|---|
| 3 | E | $2 \times 10^{10}$ |
| 4 | F | $10^{10}$ |
| 5 | G | $5 \times 10^{9}$ |
| 6 | H | $10^{9}$ |
| 7 | J | $3 \times 10^{9}$ |
| 8 | K | $2 \times 10^{9}$ |
| | ohne Esterzusatz | $10^{15}$ |

*Beispiele 9 bis 14*

Jeweils 0,5 g der gemäss Vorschriften E bis K hergestellten Phosphorsäureester bzw. Phosphorigsäureester werden in Wasser gelöst und am Foulard mit einer Flottenaufnahme von 120 % auf ein 200 g/m$^2$ schweres Polyacrylnitrilgewebe appliziert. Anschliessend wird das Gewebe 40 Minuten bei 90° C getrocknet und 48 Stunden bei 23° C und 50% relativer Luftfeuchtigkeit liegen gelassen. Hierauf wird mittels der Ringelektrode der Oberflächenwiderstand gemessen. Die Ergebnisse sind in der folgenden Tabelle 2 angegeben.

*Tabelle 2*

| Beispiel | Phosphorsäureester bzw. Phosphorigsäureester gemäss Vorschrift | Widerstand in Ohm |
|---|---|---|
| 9 | E | $4 \times 10^{10}$ |
| 10 | F | $2 \times 10^{10}$ |
| 11 | G | $8 \times 10^{10}$ |
| 12 | H | $4 \times 10^{10}$ |
| 13 | J | $3 \times 10^{10}$ |
| 14 | K | $2 \times 10^{10}$ |
| | ohne Esterzusatz | $> 10^{15}$ |

*Beispiele 15 bis 17*

Jeweils 2 g der gemäss Vorschriften E, F und H hergestellten Phosphorsäureester bzw. Phosphorigsäureester werden in 98 g Wasser gelöst und auf ein 225 g/m$^2$ schweres Polyestergewirke foulardiert. Anschliessend wird das Gewirke 60 Minuten bei 30° C getrocknet und 48 Stunden bei 23° C und 50% relativer Luftfeuchte liegen gelassen. Darauf wird mittels der Ringelektrode der Oberflächenwiderstand gemessen. Die Ergebnisse sind in der folgenden Tabelle 3 angegeben.

*Tabelle 3*

| Beispiel | Phosphorsäureester bzw. Phosphorigsäureester gemäss Vorschrift | Widerstand in Ohm |
|---|---|---|
| 15 | E | $6 \times 10^{11}$ |
| 16 | F | $6 \times 10^{11}$ |
| 17 | H | $10^{12}$ |
| | ohne Esterzusatz | $10^{15}$ |

*Beispiel 18*

5 g des gemäss Vorschrift F hergestellten Phosphorigsäureesters werden in 1 Liter Wasser gelöst. 80 Gewichtsprozente dieser Lösung werden auf ein 260 g/m$^2$ schweres Polyamid (6,6)-Gewirke auffoulardiert. Das Gewirke wird dann 60 Minuten bei 90° C getrocknet und 24 Stunden bei 23° C und 25% relativer Luftfeuchte liegen gelassen. Nach Messung mit der Ringelektrode beträgt der Oberflächenwiderstand des Gewirkes $3 \times 10^{11}$ Ohm. Der Oberflächenwiderstand für das Gewirke ohne Zusatz des Phosphorigsäureesters beträgt hingegen $10^{15}$ Ohm.

**Patentansprüche**

1. Verfahren zum antielektrostatischen Ausrüsten von synthetischen Textilmaterialien, dadurch gekennzeichnet, dass man die Textilmaterialien mit einer wässerigen, filmbildenden Zubereitung beschichtet, die einen sauren Phosphorigsäureester oder Phosphorsäureester eines gebenenfalls monoverätherten Diols der Formel

$$HO\text{-}(CH_2\text{-}CH_2\text{-}O)_n\text{—}Z$$

worin Z Wasserstoff oder Alkyl mit 1 bis 4 Kohlenstoffatomen und n 10 bis 50 bedeuten, enthält.

2. Verfahren gemäss Anspruch 1, dadurch gekennzeichnet, dass der saure Säureester als Alkalimetallsalz oder Ammoniumsalz vorliegt.

3. Verfahren gemäss einem der Ansprüche 1 und 2, dadurch gekennzeichnet, dass das Diol ein Polyäthylenglykol mit einem durchschnittlichen Molekulargewicht von 550 bis 1800 ist.

4. Verfahren gemäss einem der Ansprüche 1 bis 3, dadurch gekennzeichnet, dass der saure Säureester ein saurer Phosphorsäureester ist.

5. Verfahren gemäss einem der Ansprüche 1 bis 4, dadurch gekennzeichnet, dass der saure Phosphorsäureester aus 1 Mol Diol mit 0,5 bis 2 Mol Phosphorsäure oder den entsprechenden Äquivalenten Phosphorsäureanhydrid hergestellt worden ist.

6. Verfahren gemäss einem der Ansprüche 1 bis 5, dadurch gekennzeichnet, dass der saure Säureester in der wässerigen Zubereitung in einer Menge von 0,2 bis 10 Gew.— %, bezogen auf den Trockengehalt der Zubereitung, vorliegt.

7. Verfahren gemäss einem der Ansprüche 1 bis 6, dadurch gekennzeichnet, dass man die behandelten Textilmaterialien bei einer Temperatur von 80 bis 130°C trocknet.

8. Verfahren gemäss einem der Ansprüche 1 bis

7, dadurch gekennzeichnet, dass das Textilmaterial, Teppichmaterial aus synthetischem Polyamid ist.

9. Das gemäss einem der Ansprüche 1 bis 8 antielektrostatisch ausgerüstete synthetische Textilmaterial.

10. Wässerige Zubereitung zur Durchführung des Verfahrens gemäss Anspruch 1, dadurch gekennzeichnet, dass sie einen sauren Säureester gemäss Anspruch 1, einen Latex von synthetischen Polymeren und einen Füllstoff enthält.

11. Wässerige Zubereitung gemäss Anspruch 10, dadurch gekennzeichnet, dass sie einen Trockengehalt von 50 bis 90 Gew.-% aufweist.

**Claims**

1. A process for providing a synthetic textile fabric with an antistatic finish, which process comprises coating said fabric with an aqueous film-forming composition which contains an acid ester of phosphoric acid or phosphorous acid, said ester being derived from a free or monoetherified diol of the formula

$$HO\text{-}(CH_2\text{-}CH_2\text{-}O)_n-Z$$

wherein Z is hydrogen or alkyl of 1 to 4 carbon atoms, and n is 10 to 50.

2. A process according to claim 1, wherein the acid ester is in the form of an alkali metal salt or of an ammonium salt.

3. A process according to claim 1 or 2, wherein the diol is a polyethylene glycol having an average molecular weight of 550 to 1800.

4. A process according to any one of claims 1 to 3, wherein the acid ester is an acid ester of phosphoric acid.

5. A process according to any one of claims 1 to 4, wherein the acid ester of phosphoric acid has been obtained from 1 mole of diol with 0.5 to 2 moles of phosphoric acid or the corresponding equivalents of phosphoric anhydride.

6. A process according to any one of claims 1 to 5, wherein the acid ester is present in the aqueous composition in an amount of 0.2 to 10 % by weight, based on the solids content of said composition.

7. A process according to claim 1, wherein the treated textile fabric is dried in the temperature range from 80° to 130° C.

8. A process according to any one of claims 1 to 7, wherein the textile fabric is carpeting made of synthetic polyamide.

9. The synthetic textile material provided with an antistatic finish according to any one of claims 1 to 8.

10. An aqueous composition for carring out the process according to claim 1, which composition contains an acid ester according to claim 1, a latex of synthetic polymers, and a filler.

11. An aqueous composition according to claim 10, which has a solids content of 50 to 90 % by weight.

**Revendications**

1. Procédé d'apprêtage antiélectrostatique de matériaux textiles synthétiques, caractérisé en ce qu'on enduit les matériaux textiles d'une préparation aqueuse filmogène qui contient un ester éventuellement acide ou un ester de phosphore d'un diol éthéré ayant pour formule

$$HO\text{-}(CH_2\text{-}CH_2\text{-}O)_n-Z$$

où Z indique de l'hydrogène ou bien un alkyle ayant de 1 à 4 atomes de carbone et n représente 10 à 50.

2. Procédé selon la revendication 1, caractérisé en ce que l'ester d'acide a la forme d'un sel métal alcalin ou d'un sel d'ammonium.

3. Procédé selon l'une quelconque des revendications 1 ou 2, caractérisé en ce que le diol est un polyéthylène glycol ayant un poids moléculaire moyen de 550 à 1800.

4. Procédé selon l'une quelconque des revendications 1 à 3, caractérisé en ce que l'ester d'acide est un ester de phosphore acide.

5. Procédé selon l'une quelconque des revendications 1 à 4, caractérisé en ce que l'ester de phosphore acide se compose d'une mole d'un diol avec 0,5 à 2 moles d'acide de phosphore ou bien l'anhydride phosphorique équivalent correspondant.

6. Procédé selon l'une quelconque des revendications 1 à 5, caractérisé en ce que l'ester d'acide est présent, dans la préparation aqueuse, à raison de 0,2 à 10 % en poids en se rapportant au poids sec de la préparation.

7. Procédé selon l'une quelconque des revendications 1 à 6, caractérisé en ce que l'on sèche les matériaux textiles traités à une température de 80 à 130° C.

8. Procédé selon l'une quelconque des revendications 1 à 7, caractérisé en ce que le matériau textile est un matériau de tapis en polyamide synthétique.

9. Matériau textile synthétique apprêté antiélectrostatiquement selon l'une quelconque des revendications 1 à 8.

10. Préparation aqueuse pour la mise en oeuvre du procédé selon la revendication 1, caractérisée en ce qu'elle contient un ester d'acid selon la revendication 1, un latex de polymères synthétiques et une charge.

11. Préparation aqueuse selon la revendication 10, caractérisée en ce qu'elle présente une teneur en matières sèches de 50 à 90 % en poids.